# FASCICULE DE BREVET EUROPEEN

(11) **EP 0 558 372 B1**
(45) Date de publication et mention de la délivrance du brevet: **20.08.1997**
(21) Numéro de dépôt: 93400376.5
(22) Date de dépôt: 16.02.1993
(51) Int. Cl.: H04K 1/00

(54) **Procédé de durcissement de transmissions, en particulier entre une station de commande et un transpondeur, et dispositif de mise en oeuvre**
Verfahren zur geschützten Übertragung, insbesondere zwischen einer Steuerstation und einem Transponder und Einrichtung zur Ausführung des Verfahrens
Method for hardening transmission, in particular between a control station and a transponder and apparatus for implementing said method

(30) Priorité: 28.02.1992 FR 9202362
(43) Date de publication de la demande: 01.09.1993
(73) Titulaire: THOMSON-CSF, 75008 Paris (FR)
(72) Inventeur: Adam, Daniel, F-92402 Courbevoie Cedex (FR); Bech, André, F-92402 Courbevoie Cedex (FR); Desmoucelles, Alain, F-92402 Courbevoie Cedex (FR); Vallier, Denis, F-92402 Courbevoie Cedex (FR)
(74) Mandataire: Chaverneff, Vladimir

(56) Documents cités:
- EP-A- 0 182 762
- EP-A- 0 247 790
- DE-A- 3 415 032
- GB-A- 2 068 688

## Description

La présente invention se rapporte à un procédé de durcissement de transmissions dans les deux sens, en particulier entre une station de commande et un transpondeur, ainsi qu'à un dispositif de mise en oeuvre de ce procédé.

Les télécommunications, en particulier celles entre une station de commande et un transpondeur, comme par exemple entre une station de télécommande et un missile, peuvent être sujettes à des brouillages intentionnels ou non. Les premiers sont surtout générés par des stations de brouillage prévues à cet effet. Les brouillages non intentionnels peuvent être dus soit à d'autres télécommunications, surtout lorsqu'elles se font sur des fréquences voisines de celles utilisées pour les télécommunications en question (par exemple entre d'autres stations de télécommande proches et leurs propres missiles), soit à des anomalies diverses: pannes de matériel, phénomènes atmosphériques perturbateurs, etc. En particulier dans le cas des télécommunications de missiles, dont les temps de vol sont relativement courts, et qui doivent absolument échanger des informations sans erreurs, il est essentiel d'éliminer toutes les conséquences des brouillages.

On connaît d'après le document FR-A-2 639 102 un dispositif de guidage de missiles dans lequel on charge dans le transpondeur d'un missile une table de fréquences qui est lue en synchronisme avec une table identique de la station de guidage. Etant donné que le séquencement des différentes fréquences de ces tables est aléatoire, et étant donné le faible temps de vol des missiles, il est pratiquement impossible pour une station d'écoute et de brouillage de déterminer la valeur de la fréquence suivante à partir de l'écoute des précédentes, et donc de la brouille, et donc de les brouiller toutes et/ou d'injecter de fausses informations. Cependant, il est possible de brouiller quelques bandes de fréquences dans lesquelles certaines des fréquences desdites tables ont de grandes probabilités de se trouver. En outre, les échanges d'informations entre la station au sol et le transpondeur du missile ne sont pas à l'abri des brouillages non intentionnels précités, et le procédé connu ne permet pas de modifier en vol la table de fréquences, ce qui fait que dans le cas le plus défavorable, en particulier dans le cas de missiles à courte portée, la plupart des informations échangées peuvent être brouillées.

On connaît d'après le document DE-A-3 415 032 un système de télécommunications dont la fréquence porteuse varie pseudo-aléatoirement. La station réceptrice surveille la qualité de la transmission, et dès qu'un seuil de perturbation est dépassé pour une fréquence donnée, on bascule sur une nouvelle fréquence située en-dehors de la bande prévue. Rien n'y est prévu ou suggéré pour le cas où la station réceptrice n'arriverait pas à communiquer avec la station émettrice lorsque la fréquence utilisée est trop brouillée. D'autre part, si toutes les fréquences utilisables dans la bande de fréquences prévue étaient brouillées, cela conduirait à avoir recours à un grand nombre de fréquences de secours en-dehors de la bande prévue, ce qui reviendrait au moins à doubler la largeur de la bande initialement prévue, ce qui est pratiquement impossible lorsque la bande initiale est très large, et correspond à la valeur maximale de la bande passante des circuits d'émission et de réception comme c'est généralement le cas.

La présente invention a pour objet un procédé permettant d'assurer une transmission d'informations sans perte d'informations, le plus rapidement possible, en particulier à la suite de la détection et de l'analyse par la station de télécommande et/ou par le transpondeur de très forts brouillages intentionnels ou non sur un grand nombre de fréquences ou une large bande de fréquences, ainsi qu'un dispositif de mise en oeuvre de ce procédé, dispositif qui soit simple à implanter dans des systèmes existants.

Le procédé conforme à l'invention, pour le durcissement de transmissions impulsionnelles par agilité de fréquence dans les deux sens entre une station "maître" et au moins une station "esclave" ou transpondeur, différentes valeurs de fréquences porteuses étant mémorisées dans une table de paramètres d'émission dans chaque station, consiste après avoir mémorisé dans ladite table de paramètres de chaque station des paramètres relatifs aux impulsions du signal modulant, à modifier par échange d'informations entre les stations maître et esclave les paramètres relatifs aux impulsions du signal modulant. L'initiative de la modification peut émaner de la station maître ou de la station esclave. En cas de brouillage persistant, et/ou d'intrusion, sur certaines fréquences. Ces valeurs de fréquences ainsi affectées sont exclues.

La présente invention sera mieux comprise à la lecture de la description détaillée de deux modes de réalisation, pris à titre d'exemples non limitatifs et illustrés par le dessin annexé, sur lequel :
- la figure 1 est un bloc-diagramme simplifié d'une station maître et d'une station esclave, conformes à l'invention ;
- les figures 2 et 3 sont des diagrammes de deux modes de réalisation d'une table de valeurs pour la mise en oeuvre du procédé de l'invention ; et
- la figure 4 est un chronogramme simplifié d'un exemple de message pouvant être envoyé par la station maître.

L'invention est décrite ci-dessous en référence à une station de tir de missiles, mais il est bien entendu qu'elle n'est pas limitée à une telle application, et peut être mise en oeuvre dans une grande variété de systèmes de télécommunications, tels que des systèmes de télécommunications par satellite, des systèmes de commande de sondes spatiales, liaisons entre véhicules, etc ... pour lesquels se posent ou peuvent se poser des problèmes de brouillage, intentionnel ou non, des communications et/ou d'intrusion.

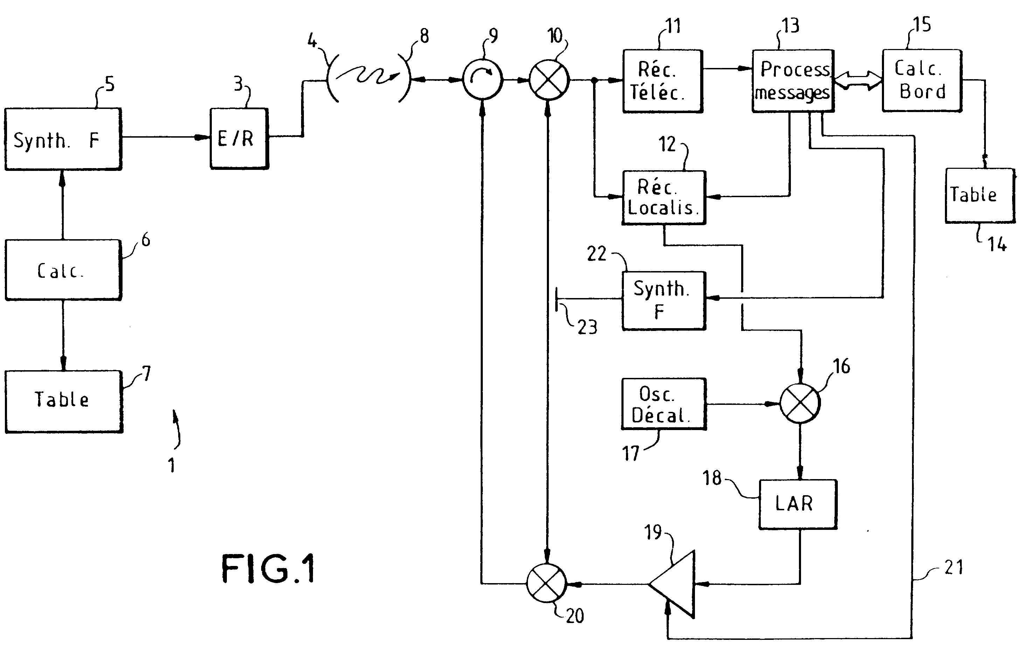

On a représenté en figure 1 une station "maître" 1 et une station "esclave" 2. La station 1 est par exemple une station de commande au sol, et la station 2 est par exemple un missile guidé par la station 1. Il est bien entendu que dans d'autres applications les rôles de station maître et station(s) esclave(s) peuvent être permutés au cours d'une session de liaison ou après un certain nombre de liaisons.

La station 1 comporte essentiellement un dispositif émetteur-récepteur 3 avec son antenne d'émission-réception 4. Toutefois, il est bien entendu que l'émetteur, le récepteur, l'antenne d'émission et l'antenne de réception peuvent être des éléments distincts. L'émetteur-récepteur 3 est relié à un circuit 5 synthétiseur de fréquences et modulateur d'impulsions. Ce modulateur agit sur le nombre d'impulsions émises et/ou leur largeur et/ou leur place temporelle. L'émetteur-récepteur 3 est également relié à un calculateur 6, ce dernier étant relié au circuit 5 et à une table de fréquences 7. Les éléments 6 et 7 sont représentés distincts, mais il est bien entendu que la table 7 peut être intégrée au calculateur 6.

La station "esclave" 2 comporte une antenne 8 d'émission-réception reliée à un dispositif d'aiguillage 9 qui est, dans le cas présent (fonctionnement en hyperfréquences) un circulateur. La voie de réception issue du dispositif 9 passe par un mélangeur 10 et comporte un récepteur 11 de télécommande et un récepteur 12 de localisation. La sortie du récepteur 11 est reliée à un processeur de traitement de messages 13 qui est lui-même relié à une table de fréquences 14 et au calculateur central 15 de la station 2. Le récepteur 12 est relié à la table 14 et à l'entrée d'un mélangeur 16. L'autre entrée du mélangeur 16 est reliée à un oscillateur de décalage 17, et sa sortie est reliée via une ligne à retard 18 à un amplificateur d'émission 19. La sortie de l'amplificateur 19 est reliée via un mélangeur 20 et le circulateur 9 à l'antenne 8. Le processeur 13 commande, par une ligne 21, le gain de l'amplificateur 19. Le processeur 13 est également relié à un synthétiseur de fréquences et modulateur d'impulsions 22, ce dernier étant couplé, grâce à un coupleur 23, aux mélangeurs 10 et 20.

Les tables de fréquences 7 et 14 comportent chacune un grand nombre, par exemple plusieurs centaines, de valeurs de paramètres de transmission (concernant la fréquence porteuse et les caractéristiques des impulsions émises), ces valeurs étant de préférence codées, les fréquences étant comprises dans la bande de fréquences de télécommunication entre les stations 1 et 2. Ces tables comportent en outre différentes combinaisons de largeurs et/ou de nombres et/ou de places temporelles d'impulsions. Par la suite, on appellera paramètres de transmission ces différentes valeurs de fréquences et ces combinaisons relatives aux caractéristiques des impulsions. Les valeurs de fréquences peuvent être avantageusement groupées en blocs de valeurs de fréquences de même ordre de grandeur, par exemple valeurs basses, moyennes et hautes. Ainsi, par exemple dans le cas d'un brouillage systématique des fréquences appartenant au bloc de valeurs élevées, le choix de fréquences de ce bloc peut être exclu par la station 1. Selon l'invention, pour renforcer les performances d'anti-brouillage et d'anti-intrusion des transmissions, on fait varier en outre les paramètres relatifs aux caractéristiques des impulsions. Les variations de ces paramètres peuvent être faites après la transmission de chaque paquet d'impulsions ou après chaque impulsion. Les tables 14 sont par exemple mémorisées peu avant le lancement des missiles. Cependant, il est bien entendu que ces tables peuvent être téléchargées en vol. La table 7 peut soit être une table figée, soit une table constituée d'une suite de valeurs choisies par programme au gré de l'opérateur de la station 1. La table 7 contient au moins les mêmes informations que la table 14.

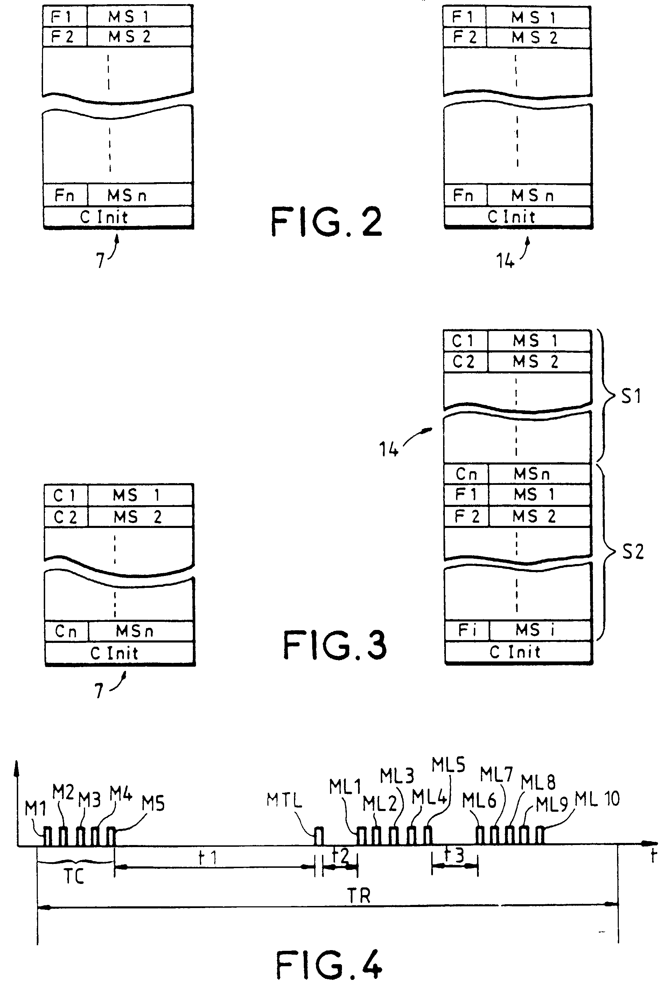

Selon un mode de réalisation de l'invention, la station 1 émet les valeurs absolues de paramètres ou de variations de paramètres de façon explicite, et dans ce cas, lesdites tables contiennent chacune ces valeurs. Comme illustré en figure 2, les tables 7 et 14 contiennent dans le même ordre, et aux mêmes adresses les fréquences F1 à Fn. A chaque adresse, on mémorise une valeur de paramètre et un mot de synchronisation ou de corrélation approprié MS1 à MSn. On mémorise à une adresse déterminée de chaque table une information Clnit de conditions initiales comportant en particulier des informations sur le mode de transmission, diverses temporisations, et des informations de service.

Selon un autre mode de réalisation de l'invention, schématiquement illustré en figure 3, la station 1 émet les valeurs absolues de paramètres ou de variations de paramètres de façon codée, par exemple avec un code comprimé. Dans ce cas, la table 7 de la station 1 contient ces codes C1 à Cn, alors que la table 14 contient d'une part, dans une section S1, les mêmes codes, et, d'autre part, dans une section S2, les valeurs décodées correspondantes des paramètres F1 à Fi (le nombre de paramètres n'est pas nécessairement égal au nombre de codes). Les tables 7 et 14 comportent également, à chaque adresse, en plus des codes et des valeurs de paramètres, des mots de synchronisation correspondants MS1 à MSn et MS1 à MSi respectivement. Dans la station 1, le calculateur 6 détermine, soit en fonction de son programme, soit sur intervention de l'opérateur de la station, le ou les paramètres de communication Fc à utiliser à un instant ultérieur donné, et transmet sa valeur codée Ci, déterminée grâce à la table 7, à la station 2. Dans la station 2, le processeur 13 commande dans la table 14 la lecture de cette valeur codée Ci dans S1, qui renvoie à l'adresse correspondante dans S2, adresse à laquelle est mémorisée la valeur désirée de chaque paramètre.

Si les tables de valeurs sont lues dans l'ordre, la station 1 fixe, à l'initialisation du système, juste avant le lancement du missile, ou au moment de son lancement, un point de départ arbitraire, qui est aussitôt communiqué à la station 2, et la lecture des tables 7 et 14 est effectuée en synchronisme.

Dans le cas contraire, la station 1 fixe à l'initialisation une fréquence initiale d'échange d'informations, puis aussitôt indique à la station 2 la valeur, codée par exemple en code compressé, ou non codée, de la prochaine fréquence ou de la prochaine variation de fréquence,ainsi que les caractéristiques de la (des) prochaines(s) impulsion(s), et ainsi de suite. Le changement de fréquence de transmission peut se faire très rapidement, en particulier en cas de brouillage intentionnel et/ou de risque d'intrusion, en fonction de la rapidité des synthétiseurs de fréquence utilisés. Les tables 7 et 14 peuvent contenir une grande quantité de combinaisons de nombres d'impulsions par paquet, de largeurs d'impulsions et de positions temporelles de ces impulsions, ainsi qu'un grand nombre de valeurs de fréquences différentes, par exemple quelques dizaines à quelques centaines de valeurs différentes, espacées chacune (lorsqu'elles sont considérées dans l'ordre) de plusieurs dizaines de MHz pour un fonctionnement dans l'une des bandes dont les fréquences sont comprises par exemple entre 1 et 40 GHz environ. La plage de fréquences ainsi couverte (de l'ordre de 1 GHz ou plus) permet généralement, en association avec un choix judicieux des caractéristiques des impulsions, de trouver, même dans un environnement fortement brouillé, quelques fréquences relativement peu brouillées, pouvant être utilisées pour les transmissions entre les stations 1 et 2. En cas de très mauvaises conditions de réception sur plusieurs fréquences essayées, il faut répéter les messages ou parties de messages non ou trop mal reçus, éventuellement en revenant sur la (les) fréquence(s) la (les) moins perturbée(s) et en adoptant d'autres combinaisons de caractéristiques des impulsions.

On va maintenant décrire, en référence à la figure 4, un exemple de messages envoyés par la station 1 à la station 2 pour l'application à un guidage de missile. Ces messages modulent une porteuse, par exemple en modulation FSK. Ces messages sont envoyés par la station 1 à intervalles, réguliers ou non, compris par exemple entre 20 et 50 ms dans le cas où la station 2 fait partie d'un missile. Ainsi, même dans le cas d'un missile très rapide (volant par exemple à Mach 3), celui-ci ne parcourt qu'une faible distance (de l'ordre de quelques dizaines de mètres) entre deux messages consécutifs. Bien entendu, en cas de nécessité, on peut diminuer l'intervalle entre messages consécutifs.

Un message, tel que représenté en figure 4, comporte, à chaque récurrence TR, au début de cette récurrence, un paquet TC de mots, par exemple cinq, référencés M1 à M5 sur la figure 4. Dans un exemple de réalisation, le mot M1 est un mot de synchronisation, le mot M2 contient l'adresse du missile (une station telle que la station 1 peut diriger simultanément plusieurs missiles) et un code de type d'ordre, et les mots M3 à M5 comportent chacun les valeurs de l'ordre ou des ordres donné(s). Dès que le récepteur 11 de la station 2 reçoit le mot M1, qui sert de code de reconnaissance, il en informe le processeur 13 qui place des "fenêtres" temporelles aux instants auxquels doivent arriver les mots M2 à M5, et ne prend en compte les informations reçues que si celles-ci s'insèrent dans lesdites fenêtres temporelles.

Pendant la période de récurrence TR considérée, au bout d'un temps t1 (par exemple d'environ 10 ms) après l'émission de M5, nécessaire à la station 2 pour traiter les ordres reçus, la station 1 émet à la même fréquence que celle utilisée pour transmettre le paquet de mots TC un mot (ou plusieurs, si nécessaire) de télécommande MTL indiquant qu'elle va procéder à un processus de localisation du missile à une fréquence Fj. Au bout d'un temps t2 (par exemple d'environ 0,5 à 1 ms) après l'émission de MTL, la station 1 émet à la fréquence Fj un paquet, comportant par exemple cinq mots ML1 à ML5. Chacun des mots ML1 à ML5 est traité par le récepteur 12 de localisation qui y inclut, de façon connue en soi, ses informations, et les renvoie au mélangeur 16. En sortie du mélangeur 16, la fréquence porteuse de ces mots est décalée de la valeur fournie par l'oscillateur 17 (par exemple quelques dizaines de MHz), retardée par la ligne à retard 18 et réémise par l'antenne 8 après amplification en 19 et mélange en 20.

Si la transmission des mots ML1 à ML5 est très brouillée, la station 1 émet, toujours pendant la période TR considérée, au bout d'un temps t3 (de préférence égal à t2), un autre paquet de cinq mots ML6 à ML10 similaires à ML1-ML5, sur une fréquence Fk différente de Fj La station 1 peut même émettre d'autres paquets de cinq mots pendant la période TR en cas de brouillage extrême et/ou modifier les caractéristiques des impulsions constituant ces mots.

Selon une caractéristique de l'invention, pour augmenter la résistance au brouillage et/ou diminuer les risques d'intrusion, la fréquence porteuse des mots peut être modifiée par la station 1 à chaque mot, et non pas à chaque paquet de mots.

Selon une autre caractéristique de l'invention, si la station 2 ne reçoit pas, on ne reçoit seulement qu'une ou deux de ces informations ML1 à ML10 par suite de très mauvaises conditions de réception, elle se place sur une fréquence de repli au bout d'un laps de temps prédéterminé et/ou modifie d'autres paramètres de liaison (caractéristiques des impulsions). La station 1, ne recevant aucune réponse à ses signaux de localisation, se place également sur cette fréquence de repli au bout du même laps de temps prédéterminé et/ou modifie de la même façon des paramètres de liaison.

Au cas où la station 2 reçoit tous les mots ML1 à ML5 et ML6 à ML10, sauf un, elle bascule quand même au bout d'un laps de temps normal vers la fréquence de réception suivante déterminée par la station 1, et que la station 2 peut déduire des informations reçues, ces informations étant surabondantes pour éviter tout retard de réaction par suite de la perte d'un nombre relativement faible d'informations.

L'invention a été décrite ci-dessus en référence à la télécommande d'un missile, mais il est bien entendu que lorsqu'elle est mise en oeuvre dans d'autres systèmes de télécommunications, la nature des signaux échangés peut être différente (par exemple pas de télécommande mais seulement interrogation/réponse), leur composition peut être différente (nombre de mots et/ou de paquets), et leurs caractéristiques temporelles les peuvent être différentes (période de récurrence, durée des mots, intervalles entre mots et paquets). La caractéristique commune principale des systèmes conformes à l'invention est de pouvoir changer de paramètre de transmission (fréquence et/ou caractéristiques des impulsions) sur ordre de l'une des stations du système (cette station n'étant pas nécessairement la même au cours d'une même session de transmission), toutes les stations du système ayant la possibilité de mémoriser des tables de valeurs (explicites ou codées) permettant de déterminer les différentes fréquences et/ou caractéristiques d'impulsions à utiliser, afin d'éviter des brouillages et/ou des intrusions.

## Revendications

1. Procédé de durcissement de transmissions impulsionnelles par agilité de fréquence dans les deux sens entre une station "maître" de commande et au moins une station "esclave" ou transpondeur, différentes valeurs de fréquences porteuses étant mémorisées dans une table de paramètres d'émission dans chaque station (1, 2), caractérisé par le fait qu'il consiste, après avoir mémorisé dans ladite table de paramètres de chaque station des paramètres relatifs aux impulsions du signal modulant (7, 14), à modifier par échange d'informations entre les stations maître et esclave des paramètres relatifs aux impulsions du signal modulant.

2. Procédé selon l'une des revendications précédentes, caractérisé par le fait que l'un au moins des paramètres suivants relatifs aux impulsions du signal modulant est modifié: nombre des impulsions, largeur des impulsions, position dans le temps des impulsions.

3. Procédé selon la revendication 1 ou 2, caractérisé par le fait que la station recevant des informations pose des fenêtres temporelles aux instants auxquels doivent arriver les impulsions suivant la première reçue.

4. Procédé selon la revendication 1, 2 ou 3, caractérisé par le fait que les modifications des paramètres des impulsions se font d'une impulsion à la suivante.

5. Procédé selon la revendication 1, 2 ou 3, caractérisé par le fait que les modifications des paramètres des impulsions se font d'un paquet d'impulsions au suivant.

6. Procédé selon l'une des revendications précédentes, caractérisé par le fait que les paramètres de liaison sont modifiés à l'initiative de la station maître.

7. Procédé selon l'une des revendications 1 à 5, caractérisé par le fait que les paramètres de liaison sont modifiés à l'initiative de la station esclave.

8. Procédé selon l'une des revendications précédentes, caractérisé par le fait que l'on exclut en cas de brouillage persistant et/ou d'intrusion sur certaines fréquences durant les échanges entre les stations maître et esclave les valeurs de fréquences ainsi affectées.

9. Procédé selon l'une des revendications précédentes, caractérisé en ce que les valeurs absolues ou les variations de caractéristiques des impulsions et/ou de fréquence sont émises par la station maître de façon codée.

10. Procédé selon la revendication 9, caractérisé par le fait que le code utilisé est un code compressé.

11. Procédé selon la revendication 9 ou 10, caractérisé par le fait que le code utilisé comporte des informations de corrélation.

12. Procédé selon l'une des revendications précédentes, caractérisé par le fait qu'en cas de très mauvaises conditions de réception, les stations maître et esclave(s) passent, au bout d'un temps prédéterminé, sur un paramètre de repli pour les paramètres de transmission.

13. Dispositif pour le durcissement de transmissions impulsionnelles par agilité de fréquence entre une station "maître" (1) et au moins une station "esclave" ou transpondeur, comportant chacune un dispositif d'émission et de réception (3, 4, 11, 12, 19, 8), un dispositif synthétiseur de fréquence (5, 22) relié à un calculateur de commande (6, 13) du processus de transmission, le calculateur étant relié à une table (7, 14) dans laquelle sont mémorisées des valeurs de fréquence porteuse caractérisé par le fait que ladite table comporte des paramètres relatifs aux impulsions du signal modulant, ces paramètres étant modifiés par échange d'informations entre les stations maître et esclave.

14. Dispositif selon la revendication 13, caractérisé par le fait que les paramètres relatifs aux impulsions sont: nombre d'impulsions par paquet, largeurs et positions temporelles des impulsions, et fréquence de ces impulsions.

## Patentansprüche

1. Verfahren zum Härten von Impulsübertragungen durch Frequenzagilität in beiden Richtungen zwischen einer Befehls"Haupt"-Station und wenigstens einer "Neben"-Station oder Antwortvorrichtung, wobei in einer Sendeparameter-Tabelle in jeder Station (1, 2) verschiedene Trägerfrequenzwerte gespeichert sind, gekennzeichnet durch die Tatsache, daß es darin besteht, nach dem Speichern von auf die Impulse des modulierenden Signals (7, 14) bezogenen Parametern in der Parametertabelle jeder Station die auf die Impulse des modulierenden Signals bezogenen Parameter durch Austausch von Informationen zwischen den Haupt- und Nebenstationen zu modifizieren.

2. Verfahren nach dem vorangehenden Anspruch, gekennzeichnet durch die Tatsache, daß wenigstens einer der folgenden Parameter, die auf die Impulse des modulierenden Signals bezogenen sind, modifiziert wird: Anzahl der Impulse, Breite der Impulse, zeitliche Position der Impulse.

3. Verfahren nach Anspruch 1 oder 2, gekennzeichnet durch die Tatsache, daß die Station, die Informationen empfängt, zu den Zeitpunkten, zu denen die dem ersten empfangenen Impuls folgenden Impulse ankommen sollen, Zeitfenster bildet.

4. Verfahren nach Anspruch 1, 2 oder 3, gekennzeichnet durch die Tatsache, daß die Modifikationen der Parameter der Impulse von einem Impuls zum nächsten erfolgen.

5. Verfahren nach Anspruch 1, 2 oder 3, gekennzeichnet durch die Tatsache, daß die Modifikationen der Parameter der Impulse von einem Impulspaket zum nächsten erfolgen.

6. Verfahren nach einem der vorangehenden Ansprüche, gekennzeichnet durch die Tatsache, daß die Verbindungsparameter auf Initiative der Hauptstation modifiziert werden.

7. Verfahren nach einem der Ansprüche 1 bis 5, gekennzeichnet durch die Tatsache, daß die Verbindungsparameter auf Initiative der Nebenstation modifiziert werden.

8. Verfahren nach einem der vorangehenden Ansprüche, gekennzeichnet durch die Tatsache, daß im Fall einer anhaltenden und/oder gelegentlichen Störung auf bestimmten Frequenzen während des Austausches zwischen den Haupt- und Nebenstationen die so beeinflußten Frequenzwerte ausgeschlossen werden.

9. Verfahren nach einem der vorangehenden Ansprüche, dadurch gekennzeichnet, daß die Absolutwerte oder die Veränderungen von Impulseigenschaften und/oder einer Frequenz von der Hauptstation in codierter Weise gesendet werden.

10. Verfahren nach Anspruch 9, gekennzeichnet durch die Tatsache, daß der verwendete Code ein komprimierter Code ist.

11. Verfahren nach Anspruch 9 oder 10, gekennzeichnet durch die Tatsache, daß der verwendete Code Korrelationsinformationen enthält.

12. Verfahren nach einem der vorangehenden Ansprüche, gekennzeichnet durch die Tatsache, daß im Fall von sehr schlechten Empfangsbedingungen die Haupt- und Nebenstationen am Ende einer vorgegebenen Dauer zu einem Replizierungsparameter für die Übertragungsparameter übergehen.

13. Vorrichtung für die Härtung von Impulsübertragungen durch Frequenzagilität zwischen einer "Haupt"-Station (1) und wenigstens einer "Neben"-Station oder Antwortvorrichtung, die jeweils eine Sende- und Empfangsvorrichtung (3, 4, 11, 12, 19, 8) und eine Frequenzsynthetisierungsvorrichtung (5, 22), die mit einem Befehlsrechner (6, 13) des Übertragungsprozesses verbunden ist, enthalten, wobei der Rechner mit einer Tabelle (7, 14) verbunden ist, in der Trägerfrequenzwerte gespeichert sind, gekennzeichnet durch die Tatsache, daß die Tabelle Parameter enthält, die auf die Impulse des modulierenden Signals bezogen sind, wobei diese Parameter durch einen Austausch von Informationen zwischen den Haupt- und Nebenstationen modifiziert werden.

14. Vorrichtung nach Anspruch 13, gekennzeichnet durch die Tatsache, daß die auf die Impulse bezogenen Parameter durch die Anzahl der Impulse pro Paket, durch die Breiten und zeitlichen Positionen der Impulse sowie durch die Frequenz dieser Impulse gegeben sind.

## Claims

1. Method of hardening pulse transmissions by frequency hopping in both directions between a "master" control station and at least one "slave" station or transponder, various values of carrier frequencies being memorized in a table of transmission parameters in each station (1, 2), characterized in that it consists, after having memorized in the said table of parameters of each station parameters relating to the pulses of the modulating signal (7, 14), in modifying, by exchanging data between the master and slave stations, parameters relating to the pulses of the modulating signal.

2. Method according to one of the above claims, characterized in that at least one of the following parameters relating to the pulses of the modulating signal is modified: number of pulses, width of the pulses, temporal position of the pulses.

3. Method according to Claim 1 or 2, characterized in that the station that receives the data places time windows at the instants at which the next pulses, following the first received, must arrive.

4. Method according to Claim 1, 2 or 3, characterized in that the pulse parameters are modified from one pulse to the next.

5. Method according to Claim 1, 2 or 3, characterized in that the pulse parameters are modified from one pulse packet to the next.

6. Method according to one of the above claims, characterized in that the master station instigates modifications to the link parameters.

7. Method according to one of Claims 1 to 5, characterized in that the slave station instigates modifications to the link parameters.

8. Method according to one of the above claims, characterized in that, if there is persistent jamming and/or intrusion on certain frequencies during exchanges between the master and slave stations, the frequency values thus affected are excluded.

9. Method according to one of the above claims, characterized in that the master station transmits the absolute values or variations in the characteristics of pulses and/or frequency in coded form.

10. Method according to Claim 9, characterized in that the code used is a compressed code.

11. Method according to Claim 9 or 10, characterized in that the code used includes correlation data.

12. Method according to one of the above claims, characterized in that, if the reception conditions are very bad, the master station and slave station(s) switch, after a predetermined time, to a fallback parameter in respect of the transmission parameters.

13. A device to harden pulse transmissions by frequency hopping between a "master" station (1) and at least one "slave" station or transponder, each containing a transmitter and receiver device (3, 4, 11, 12, 19, 8), a frequency synthesizer device (5, 22) connected to a computer (6, 13) to control the transmission process, the computer being linked to a table (7, 14) in which carrier frequency values are memorized, characterized in that the said table contains parameters relating to the pulses of the modulating signal, these parameters being modified by exchanging data between the master and slave stations.

14. Device according to Claim 13, characterized in that the parameters relating to the pulses are: number of pulses per packet, widths and temporal positions of the pulses, and frequency of these pulses.
